Europäisches Patentamt

(19) European Patent Office

Office européen des brevets

(11) Numéro de publication : **0 014 169**
**B1**

(12) **FASCICULE DE BREVET EUROPÉEN**

(45) Date de publication du fascicule du brevet :
15.12.82

(21) Numéro de dépôt : **80430001.0**

(22) Date de dépôt : **10.01.80**

(51) Int. Cl.³ : **C 01 F 11/28, C 01 B 31/20**

(54) Procédé et installation pour la fabrication de chlorure de calcium.

(30) Priorité : **12.01.79 FR 7901299**

(43) Date de publication de la demande :
**06.08.80 (Bulletin 80/16)**

(45) Mention de la délivrance du brevet :
**15.12.82 Bulletin 82/50**

(84) Etats contractants désignés :
**AT BE CH DE GB IT NL SE**

(56) Documents cités :
**DE C 28 087**
**FR A 1 426 207**
**FR A 1 513 749**

(73) Titulaire : **ISO (Société anonyme)**
**Route de Montfrin**
**F-30390 Aramon (FR)**

(72) Inventeur : **Teyssier, Gérard**
**Route de Montfrin**
**F-30390 Aramon (FR)**
Inventeur : **Lepant, Marcel**
**8 bis, rue Coysevox**
**F-75018 Paris (FR)**

(74) Mandataire : **Marek, Pierre**
**32, rue de la Loge**
**F-13002 Marseille (FR)**

Procédé et installation pour la fabrication de chlorure de calium

La présente invention concerne un procédé et une installation pour la fabrication de chlorure de calcium. Plus précisément, elle vise un procédé et un appareil permettant la production, en continu, d'une solution de chlorure de calcium obtenue par action de l'acide chlorhydrique sur le carbonate de calcium.

Il est connu (FR-A-1 513 749) de réaliser une réaction entre un produit contenant un carbonate et un acide, pour produire du gaz carbonique et un produit réactionnel insoluble, au moyen d'un procédé suivant lequel le produit contenant le carbonate est amené à la partie supérieure d'un lit réactionnel de matériau à base de carbonate reposant sur une grille installée dans le fond d'une colonne à réaction ouverte à son sommet, l'acide étant introduit dans la partie basse du lit réactionnel à une certaine distance au-dessus de la grille, tandis que le gaz carbonique est évacué hors de ladite colonne par la partie supérieure du lit réactionnel.

Outre le fait qu'un tel procédé apparaît plutôt comme une méthode de neutralisation d'acides que comme un procédé de production industrielle de chlorure de calcium, il présente de sérieux inconvénients découlant notamment du fait qu'il produit un volume considérable de mousses qui montent à la partie supérieure de la colonne à réaction en provoquant : une durée de réaction longue, un dégagement de gaz chlorhydrique irritant et malsain qui se répand dans l'atmosphère, un colmatage rapide de l'orifice d'alimentation de la trémie de chargement par la formation d'un bouchon solidifié dans ledit orifice sous l'influence des mousses produites par la réaction, une action contrariant le parfait accomplissement de la réaction.

Il est également connu (DE-C-28 087) de produire une réaction entre un carbonate de calcium et une solution d'acide chlorhydrique dans un réacteur dont la partie supérieure est agencée pour l'introduction du carbonate de calcium sous forme de pierre à chaux et de l'acide chlorhydrique, et qui comporte un orifice de purge dans sa partie inférieure ; ladite partie supérieure formant chambre à réaction étant délimitée par la paroi horizontale d'une deuxième chambre cylindrique logée concentriquement dans la partie inférieure dudit réacteur. Un tel appareil destiné à produire du gaz carbonique pour la fourniture de bière sous pression, ne convient absolument pas à la production industrielle, en continu, de chlorure de calcium. En effet, si la solution d'acide chlorhydrique est introduite dans la partie supérieure du réacteur, elle s'écoule sur la paroi latérale de ce dernier jusqu'à son fond, de manière à remplir l'espace annulaire ménagé entre ladite paroi latérale et celle de la chambre cylindrique intérieure. De la sorte, la réaction se produit dans la partie inférieure de la charge de carbonate de calcium et la solution de chlorure de calcium qui en résulte retombe dans le fond du réacteur où se trouve la solution d'acide chlorhydrique.

Un but visé par le procédé et l'installation selon la présente invention est donc de remédier aux insuffisances et aux inconvénients des méthodes et appareils utilisés pour réaliser une réaction entre le carbonate de calcium et l'acide chlorhydrique, pour produire industriellement, en continu, du chlorure de calcium.

Suivant le procédé de l'invention, cette réaction est opérée dans la partie supérieure fermée de manière étanche d'un réacteur dont la partie inférieure est pourvue d'un orifice de sortie, ce procédé étant remarquable par le fait que le carbonate de calcium est déposé sur un tamis filtrant délimitant lesdites parties supérieure et inférieure, et en ce que la solution d'acide chlorhydrique est introduite dans ladite partie supérieure, au-dessus du niveau de carbonate de calcium, de sorte que la pression du gaz carbonique engendré par ladite réaction sert de véhicule assurant la propulsion de la solution de chlorure de calcium obtenue, vers la sortie du réacteur, à travers ledit tamis sur lequel repose la charge de carbonate de calcium.

L'installation selon la présente invention comprend un réacteur dont la partie supérieure fermée de manière étanche, est agencée pour l'introduction du carbonate de calcium et de l'acide chlorhydrique, et dont la partie inférieure est pourvue d'un orifice de sortie pour l'évacuation de la solution de chlorure de calcium obtenue, cette installation étant remarquable par le fait que lesdites parties supérieure et inférieure du réacteur sont délimitées par un tamis filtrant, de façon à former une chambre à réaction supérieure dont la base est constituée par ledit tamis, l'orifice de sortie étant disposé au-dessous de ce dernier.

Les avantages obtenus par la mise en œuvre du procédé et de l'installation selon l'invention sont nombreux. On souligne notamment :

— la possibilité de produire industriellement, en continu, du chlorure de calcium pur ;

— une réaction s'opérant dans de bonnes conditions et dont la durée est relativement courte ;

— la possibilité d'utiliser des matières premières peu coûteuses, à savoir : des solutions d'acide chlorhydrique résiduaires de diverses concentrations provenant d'autres procédés industriels, et un carbonate de calcium concassé brut d'extraction de carrière ;

— la production, en cas d'utilisation d'acide concentré, d'une chaleur de réaction suffisante pour amener la solution sortante à une température comprise entre 30 et 50 °C, évitant ainsi la cristallisation prématurée de l'hexahydrate dans l'installation ;

— une capacité de production considérable pour une installation de dimensions réduites, dont une taille moyenne permet une production de solution concentrée de chlorure de calcium allant de 2 à 10 t/heure ;

— une construction simple et robuste de haute fiabilité ne comportant pas de constituants mécaniques ou électriques, sources de pannes ;

— aucun apport d'énergie mécanique pour le fonctionnement ou la régulation ;

— une absence totale de pollution atmosphérique, due au rendement quantitatif de la réaction par rapport à l'acide chlorhydrique ;

— une récupération aisée du gaz carbonique susceptible d'être utilisé directement dans une installation de compression, après un simple séchage.

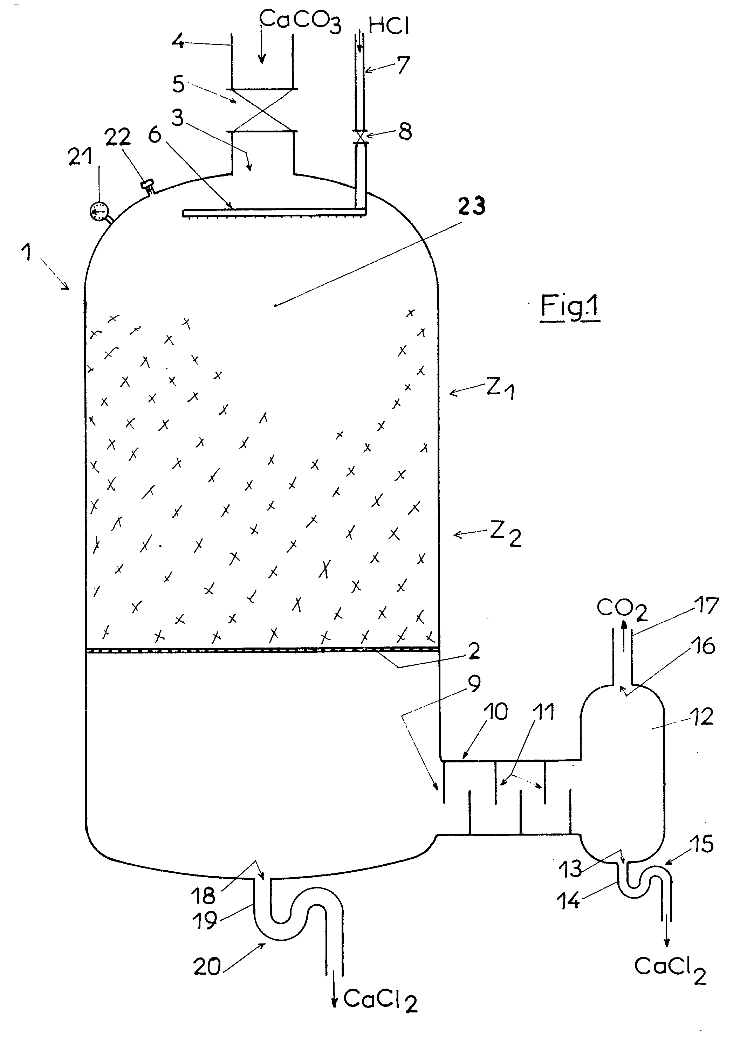

Ces buts, caractéristiques et avantages, et d'autres encore, ressortiront mieux de la description qui suit et du dessin annexé dont l'unique figure est une coupe verticale, à caractéristique schématique, de l'installation selon l'invention.

Cette installation comprend un réacteur 1 constitué par un réservoir fermé, de forme générale cylindrique, par exemple réalisé en tout métal convenable et protégé, intérieurement, par un revêtement anti-acide connu en soi.

Les dimensions de ce réacteur varient en fonction des besoins, ledit réacteur pouvant avantageusement avoir une hauteur double de son diamètre et être construit pour résister à des pressions intérieures de 3 à 5 bars.

Il est équipé, intérieurement, d'un tamis filtrant 2 destiné à retenir la charge de carbonate de calcium tout en permettant le passage de la solution engendrée par la réaction.

A son sommet, le réacteur comporte une large ouverture 3 communiquant avec un conduit vertical d'alimentation 4 relié à la base d'une trémie de chargement (non représentée) destinée à contenir le carbonate de calcium et disposée au-dessus du réacteur. Une vanne 5, par exemple installée sur le conduit 4, permet l'ouverture et la fermeture étanche alternées de l'orifice de chargement 3, lors du fonctionnement de l'installation.

Des moyens d'arrosage ou de pulvérisation, par exemple constitués par une rampe d'arrosage 6 en matériau résistant, sont installés, intérieurement, à la partie supérieure du réacteur. Ces moyens d'arrosage sont reliés à un réservoir d'acide chlorhydrique (non représenté) au moyen d'une tuyauterie convenable 7 équipée d'une vanne 8. Ce réservoir est disposé au-dessus du niveau auquel sont installés les moyens d'arrosage ou de pulvérisation, de façon que la solution d'acide chlorhydrique puisse s'écouler par gravité jusqu'auxdits moyens.

Le tamis filtrant 2 délimite la partie supérieure du réacteur, fermée de manière étanche lorsque les vannes 5 et 8 sont en position de fermeture, de façon à constituer une chambre à réaction 23 dont la base est constituée par ledit tamis. A sa partie inférieure, le réacteur comporte au moins un orifice de sortie disposé au-dessous du tamis 2 et communiquant avec un séparateur.

De manière avantageuse, un orifice de sortie 9 de gros diamètre est ménagé à la base du réacteur, dans la paroi latérale de ce dernier.

Cet orifice communique avec un collecteur 10 de diamètre identique, pourvu de chicanes intérieures 11 et communiquant avec un séparateur 12, lesdites chicanes ayant pour rôle de freiner l'arrivée de la solution de chlorure de calcium et du gaz carbonique dans ledit séparateur.

Ce dernier comporte :

— d'une part, à sa base, un orifice de sortie 13 communiquant avec une conduite collectrice 14 munie d'un siphon 15 et débouchant à la partie supérieure d'une cuve de stockage (non représentée) ou autre récipient de récupération du chlorure de calcium ;

— d'autre part, à sa partie supérieure, un orifice de sortie 16 communiquant avec un conduit 17 lequel peut être avantageusement relié à un réservoir ou autre installation de récupération (non illustrée).

Le fond du réacteur est doté d'un orifice de vidange 18 communiquant avec une conduite collectrice 19 pourvue d'un siphon 20 et aboutissant également à la partie supérieure de la cuve de récupération du chlorure de calcium.

Un manomètre 21 et une soupape 22 installés à la partie supérieure du réacteur, permettent, respectivement, de contrôler la pression et d'assurer la sécurité de l'installation.

On expose ci-après le procédé de l'invention mis en œuvre à l'aide de l'installation précédemment décrite :

L'ouverture de la vanne 5 permet l'introduction, par gravité, dans la partie supérieure ou chambre à réaction 23 du réacteur, du carbonate de calcium ($CaCO_3$), lequel est, par exemple, broyé en grains de 0,1 à 30 mm, de préférence en grains de 5 à 10 mm. Cette charge peut représenter un volume de 1 à 25 m³.

Après introduction du volume souhaitable de carbonate de calcium, la vanne 5 est fermée, tandis que s'ouvre la vanne 8 permettant l'arrosage ou la pulvérisation, par gravité, de la solution aqueuse d'acide chlorhydrique (HCl) sur la charge de carbonate de calcium.

La réaction s'opère dans un temps relativement bref et la solution de chlorure de calcium produite est propulsée, en direction de l'orifice de sortie 13 à partir de la couche réactionnelle supérieure Z1 (dite zone de réaction Z1) de la charge de carbonate de calcium, à travers la couche sous-jacente inférieure Z2 dite zone de neutralisation Z2, sous la pression du gaz carbonique engendré par ladite réaction, en assurant ainsi la neutralisation complète et la clarification de ladite solution de chlorure de calcium.

Lorsque le niveau supérieur de la charge de carbonate de calcium atteint la zone de neutralisation Z2, la vanne 8 se ferme, tandis que la vanne 5 s'ouvre de nouveau pour autoriser l'introduction de la quantité nécessaire du carbonate de calcium pour remplir le volume de la zone de réaction Z1.

La vanne 5 est alors fermée, tandis que s'ouvre la vanne 8, et ainsi de suite, l'installation fonctionnant de manière continue par la répétition du cycle ci-dessus.

Le fonctionnement automatique de cette installation est assuré par tout dispositif d'automation convenable, connu en soi. La solution saline propulsée par le gaz carbonique est acheminée, à travers le collecteur 10, jusqu'au séparateur 12 d'où la solution de chlorure de calcium (CaCl₂) descend, par gravité, dans la cuve de stockage, tandis que le gaz caronique (CO₂) exempt d'acide chlorhydrique sort par l'orifice 16 et est acheminé vers une installation de récupération.

**Revendications**

1. Procédé pour la production de chlorure de calcium par l'action de l'acide chlorhydrique sur le carbonate de calcium, suivant lequel cette réaction est opérée dans la partie supérieure (23) fermée de manière étanche d'un réacteur (1) dont la partie inférieure est pourvue d'un orifice de sortie (9), caractérisé en ce que le carbonate de calcium est déposé sur un tamis filtrant (2) délimitant lesdites parties supérieure et inférieure, et en ce que la solution d'acide chlorhydrique est introduite dans ladite partie supérieure, au-dessus du niveau de carbonate de calcium, de sorte que la pression du gaz carbonique engendré par ladite réaction sert de véhicule assurant la propulsion de la solution de chlorure de calcium obtenue, vers ladite sortie (9) du réacteur, à travers ledit tamis (2).

2. Procédé suivant la revendication 1, caractérisé en ce que l'on cesse l'introduction de la solution d'acide chlorhydrique avant que la réaction n'atteigne la couche inférieure de la charge de carbonate de calcium reposant sur le tamis (2), et en ce que l'on introduit ensuite une nouvelle quantité de carbonate de calcium dans la partie supérieure (23) du réacteur (1) avant de procéder à une nouvelle pulvérisation de solution d'acide chlorhydrique, de façon à conserver, lors de la réaction s'opérant en continu, une zone de neutralisation (Z2) constituée par ladite couche inférieure et située au-dessous d'une zone de réaction (Z1), de sorte que la solution de chlorure de calcium produite est propulsée vers la sortie du réacteur à travers ladite couche de neutralisation.

3. Procédé suivant l'une des revendications 1 ou 2, caractérisé en ce que la solution de chlorure de calcium obtenue est acheminée, sous la poussée du gaz carbonique, jusqu'à un séparateur (12) d'où la solution saline et le gaz carbonique sont séparés, la première descendant, par gravité, jusqu'à une cuve de stockage, tandis que le second est, de préférence, dirigé vers une installation de récupération.

4. Procédé suivant la revendication 3, caractérisé en ce que la solution de chlorure de calcium obtenue est acheminée, sous la poussée du gaz carbonique, jusqu'audit séparateur (12) à travers un collecteur (10) pourvu de chicanes intérieures (11) et placé entre la sortie (9) du réacteur (1) et ledit séparateur.

5. Installation pour la production de chlorure de calcium à partir d'acide chlorhydrique et de carbonate de calcium, comprenant un réacteur (1) dont la partie supérieure (23) fermée de manière étanche, est agencée pour l'introduction du carbonate de calcium et de l'acide chlorhydrique et dont la partie inférieure comporte un orifice de sortie (9) pour l'évacuation de la solution de chlorure de calcium obtenue, caractérisée en ce que lesdites parties supérieure et inférieure du réacteur sont délimitées par un tamis filtrant (2), de façon à former une chambre à réaction supérieure (23) dont la base est constituée par ledit tamis, ledit orifice de sortie (9) étant disposé au-dessous de ce dernier.

6. Installation selon la revendication 5, caractérisée en ce que l'orifice de sortie (9) du réacteur communique avec un collecteur (10) aboutissant à un séparateur (12) où s'opère la séparation de la solution de chlorure de calcium et du gaz carbonique.

7. Installation selon la revendication 6, caractérisée en ce que le collecteur (10) est muni, intérieurement, d'une pluralité de chicanes (11).

8. Installation selon la revendication 5, caractérisée en ce que le fond du réacteur est pourvu d'un orifice de vidange (18).

**Claims**

1. Process for the production of calcium chloride by the action of hydrochloric acid on calcium carbonate, according to which this reaction is carried out in the upper part (23), closed in airtight manner, of a reaction vessel (1) the lower part of which is provided with an outlet opening (9), characterised in that the calcium carbonate is deposited on a filtering strainer (2) dividing the said upper and lower parts, and in that the solution of hydrochloric acid is introduced into the said upper part, above the level of the calcium carbonate, in such a manner that the pressure of the carbonic gas generated by the said reaction serves as a propellant ensuring the propulsion of the solution of calcium chloride obtained towards said outlet opening (9) of the reaction vessel, through the said strainer (2).

2. Process according to claim 1, characterised in that the introduction of the solution of hydrochloric acid is terminated before the reaction reaches the lower layer of the charge of calcium carbonate resting on the strainer (2), and in that there is then introduced a new quantity of calcium carbonate into the upper part (23) of the reaction vessel (1) before proceeding with a new spraying with solution of hydrochloric acid, in such a manner as to retain, during the continuous reaction, a neutralisation zone (Z2) constituted by the said lower layer and situated below a reaction zone (Z1), such that the solution of calcium chloride produced is propelled towards the outlet opening of the reaction vessel through said neutralisation layer.

3. Process according to one of claims 1 or 2, characterised in that the solution of calcium chloride is propelled forwards, under the pressure of the carbonic gas, to a separator (12) where the saline solution and the carbonic gas are separated, the first descending by gravity to a storage vat, whilst the second is preferably directed towards a recuperation installation.

4. Process according to claim 3 characterised in that the solution of calcium chloride obtained is forwarded, under the pressure of the carbonic gas, to the said separator (12) through a collector (10) provided with internal baffles (11) and disposed between the outlet opening (9) of the reaction vessel (1) and the said separator.

5. Apparatus for the production of calcium chloride starting with hydrochloric acid and calcium carbonate, comprising a reaction vessel (1) the upper part (23) of which, closed in airtight manner, is arranged for the introduction of the calcium carbonate and the hydrochloric acid and of which the lower part comprises an outlet opening (9) for the evacuation of the solution of calcium chloride obtained, characterised in that the said upper and lower parts of the reaction vessel are divided by a filtering strainer (2) in such a manner as to form an upper reaction chamber (23) the base of which is constituted by the said strainer, the said outlet opening (9) being disposed below this latter.

6. Apparatus according to claim 5, characterised in that the outlet opening (9) of the reaction vessel communicates with a collector (10) terminating at a separator (12) where there occurs the separation of the solution of calcium chloride and the carbonic gas.

7. Apparatus according to claim 6 characterised in that the collector (10) is provided, internally, with a plurality of baffles (11).

8. Apparatus according to claim 5 characterised in that the base of the reaction vessel is provided with a draining opening (18).

**Ansprüche**

1. Verfahren zur Herstellung von Calziumchlorid durch die Wirkung von Chlorwasserstoffsäure auf Calziumkarbonat, bei dem diese Reaktion in dem oberen, dicht abgeschlossenen Teil (23) eines Reaktors (1) durchgeführt wird, dessen unterer Teil eine Austragsöffnung (9) aufweist, dadurch gekennzeichnet, dass man das Calziumkarbonat auf ein die genannten oberen und unteren Teile voneinander trennendes Filtergewebe (2) legt und dass man die Chlorwasserstoffsäurelösung in den genannten oberen Teil oberhalb des Calziumkarbonats einführt, so dass der Druck des durch die genannte Reaktion erzeugten Kohlendioxids als Träger der erzeugten Calziumchloridlösung in Richtung auf die genannte Austragsöffnung (9) des Reaktors durch das Filtergewebe (2) hindurch dient.

2. Verfahren nach Anspruch 1, dadurch gekennzeichnet, dass man die Einfuhr der Chlorwasserstoffsäurelösung anhält bevor die Reaktion die untere Schicht der auf dem Filtergewebe (2) liegenden Calziumkarbonatladung erreicht und dass man als dann eine weitere Menge an Calziumkarbonat in den oberen Teil (23) des Reaktors (1) einführt, ehe eine neue Zerstäubung von Chlorwasserstoffsäurelösung vorgenommen wird, so dass bei kontinuierlich durchgeführter Reaktion eine durch die genannte untere Schicht gebildete und unterhalb einer Reaktionszone (Z1) angeordnete Neutralisierungszone (Z2) aufrecht erhalten wird, so dass die erzeugte Calziumchloridlösung durch die genannte Neutralisierungsschicht hindurch in Richtung auf den Ausgang des Reaktors getrieben wird.

3. Verfahren nach einem der Ansprüche 1 oder 2, dadurch gekennzeichnet, dass die erzeugte Calziumchloridlösung unter der Druckwirkung des Kohlendioxids bis zu einer Trennvorrichtung (12) befördert wird, wo die Salzlösung und das Kohlendioxid voneinander getrennt werden, wobei die erste unter Schwerkraftwirkung in einen Lagertank geführt wird, während das zweite vorzugsweise in eine Wiedergewinnungsanlage befördert wird.

4. Verfahren nach Anspruch 3, dadurch gekennzeichnet, dass die erzeugte Calziumchloridlösung durch den Druck des Kohlendioxids bis zu der genannten Trennvorrichtung (12) durch einen Sammler (10), der mit inneren Prallplatten (11) versehen ist und zwischen dem Ausgang (9) des Reaktors (1) und der genannten Trennvorrichtung (12) angeordnet ist, befördert wird.

5. Vorrichtung zur Herstellung von Calziumchlorid aus Chlorwasserstoffsäure und Calziumkarbonat, mit einem Reaktor (1), dessen oberer dicht abgeschlossener Teil (23) zur Einfuhr von Calziumkarbonat und Chlorwasserstoffsäure ausgestattet ist und dessen unterer Teil eine Austragsöffnung (9) zur Entfernung der erzeugten Calziumchloridlösung aufweist, dadurch gekennzeichnet, dass die genannten oberen und unteren Teile des Reaktors durch ein Filtergewebe (2) so voneinander getrennt sind, dass eine obere Reaktionskammer (23) gebildet wird, deren Boden durch das Filtergewebe gebildet ist, wobei die genannte Austragsöffnung (9) unterhalb des Filtergewebes angeordnet ist.

6. Vorrichtung nach Anspruch 5, dadurch gekennzeichnet, dass die Austragsöffnung (9) des Reaktors mit einem, bei einer Trennvorrichtung (12) endenden Sammler (10) in Verbindung steht, wobei die Trennung der Calziumchloridlösung von dem Kohlendioxid in der Trennvorrichtung (12) stattfindet.

7. Vorrichtung nach Anspruch 6, dadurch gekennzeichnet, dass der Sammler (10) innen mehrere Prallplatten (11) aufweist.

8. Vorrichtung nach Anspruch 5, dadurch gekennzeichnet, dass der Boden des Reaktors mit einer Entleerungsöffnung (18) versehen ist.

0 014 169

Fig.1